# EUROPÄISCHE PATENTSCHRIFT

(11) **EP 0 497 294 B1**
(45) Veröffentlichungstag und Bekanntmachung des Hinweises auf die Patenterteilung: **10.05.1995**
(21) Anmeldenummer: 92101402.3
(22) Anmeldetag: 29.01.1992
(51) Int. Cl.: B01D 17/028, B01D 21/00

(54) **Ringkammerabscheider**
Toroidal chamber separator
Séparateur à chambre toroidal

(30) Priorität: 31.01.1991 DE 4102776
(43) Veröffentlichungstag der Anmeldung: 05.08.1992
(73) Patentinhaber: WINKELHORST TRENNTECHNIK GMBH, D-50996 Köln (DE)
(72) Erfinder: Winkelhorst, Jochen, W-5000 Köln 50 (DE)
(74) Vertreter: Selting, Günther, Dipl.-Ing.

(56) Entgegenhaltungen:
- DE-A- 2 540 264
- DE-A- 3 929 044
- DE-U- 9 002 726
- FR-A- 994 118
- GB-A- 2 063 090

## Beschreibung

Die Erfindung betrifft ein Verfahren zum Betreiben eines Ringkammerabscheiders zum Trennen der unterschiedlich schweren Fraktionen eines Flüssigkeitsgemisches sowie einen Ringkammerabscheider zur Durchführung dieses Verfahrens.

Aus EP-A-0 350 906 ist ein Ringkammerabscheider bekannt, der als Ölabscheider eingesetzt werden kann. Im Inneren eines Gehäuses befinden sich Ringwände, welche konzentrische Ringkammern bilden. Die Ringwände stoßen alternierend gegen eine Zwischendecke des Gehäuses und gegen einen Boden, so daß sich für die in das Gehäuse eingeführte Rohflüssigkeit im Inneren des Gehäuses ein mäanderförmiger Weg ergibt, wobei die Flüssigkeit abwechselnd um die unteren und die oberen Enden der Trennwände herum umgeleitet wird, um schließlich in die Zentralkammer zu gelangen. Jede der Ringkammern steht an ihrem oberen Ende mit dem Kopfraum des Gehäuses in Verbindung, in welchem sich die leichte Fraktion (Öl) ansammelt, während die schwere Fraktion (Wasser) in die nächstfolgende innenliegende Kammer gedrückt wird. Die Zentralkammer ist am unteren Ende mit dem Auslaß verbunden. Durch die kaskadenartig erfolgende Dichtetrennung der beiden Fraktionen erhält man eine gute Abscheidung der leichten von der schweren Fraktion. Wenn die Rohflüssigkeit Festkörperbestandteile, z.B. Metallspäne oder Sand, enthält, sammeln sich diese Festkörperbestandteile im unteren Bereich des Ringkammerabscheiders an, wobei die die Ringkammern verbindenden Umlenkbereiche verstopfen können. Hinzukommt, daß solche Festkörperbestandteile durch Anlagerung von Öl leicht verklumpen und eine Barriere bilden können, die die ordnungsgemäße Funktion des Abscheiders beeinträchtigt.

DE-U-90 02 726 beschreibt einen Ringkammerabscheider, bei dem zum Zwecke des leichteren Entfernens von Feststoffen der Gehäuseboden abnehmbar ist. Dadurch können zwar die angesammelten Feststoffe entfernt werden, jedoch ist hierzu jeweils das öffnen des Gehäuses erforderlich, wozu vorher der gesamte Behälter abgelassen werden muß. Das vorzeitige Verstopfen der zwischen den Ringkammern vorgesehenen Durchlässe wird nicht verhindert.

Bekannt sind schließlich auch Schrägplattenabscheider, die eine Anzahl ebener schrägstehender Platten enthalten, welche parallel zueinander angeordnet sind. Die schrägen Platten begrenzen nicht einzelne Ringkammern, die nacheinander durchströmt werden sondern sie teilen lediglich den die Rohflüssigkeit enthaltenden Raum in parallele Strömungswege auf. Die Schrägplattenanordnung bewirkt, daß die freie Aufstiegshöhe von Öltröpfchen verkürzt wird, um die Behandlungszeit zu verringern. Wenn ein senkrecht aufsteigendes Öltröpfchen eine Platte erreicht, setzt es sich an dieser ab und kann dann von der Rohflüssigkeit nicht mehr aufgenommen werden. Die an einer Platte angesammelten Öltröpfchen vereinigen sich zu größeren Tropfen und steigen entlang der schrägen Platte auf.

Der Erfindung liegt die Aufgabe zugrunde, ein Verfahren zum Betreiben eines Ringkammerabscheiders zu schaffen, die die Trennung eines Flussigkeitsgemisches ermöglichen, auch wenn sich am Behalterboden Feststoffansammlungen in Form von Schlamm gebildet haben.

Die Lösung dieser Aufgabe erfolgt erfindungsgemäß mit den im Patentanspruch 1 angegebenen Merkmalen.

Der beim erfindungsgemäßen Verfahren verwendete Abscheider kann von seinem konstruktiven Aufbau her den bekannten Ringkammerabscheidern entsprechen, jedoch unterscheidet sich von diesen durch die Schrägstellung des Gehäuses und der darin enthaltenen Ringkammern. Durch die Schrägstellung wird erreicht, daß die unteren Durchlässe, die die Ringkammern untereinander verbinden und die von der Flüssigkeit durchströmt werden, nicht in einer horizontalen Ebene liegen sondern zur Horizontalen schräg verlaufen. Diese normalerweise ringförmig ausgebildeten Durchlässe verstopfen im Falle von Schlammansammlungen nur an dem unteren Ende. Selbst wenn dort eine Verstopfung auftritt, bleibt der obere Bereich des ringförmig umlaufenden Durchlasses von Feststoffen frei. Die unteren Durchlässe müssen nicht notwendigerweise ununterbrochen kreisförmig umlaufen sondern sie können auch durch Stützelemente oder Wandteile unterteilt sein. Wichtig ist nur, daß ein unterer Durchlaß auf einer geschlossenen Bahn liegt, die in einer schräg zur Horizontalen angeordneten Ebene verläuft, so daß der Durchlaß im Falle von Schlammansammlung ausschließlich am unteren Ende, und somit nur teilweise, verstopfen kann.

Mit dem erfindungsgemäßen Verfahren wird bei schräggestelltem Gehäuse darüberhinaus die freie Aufstiegslänge der Tröpfchen der leichteren Fraktion verkürzt, d.h. diejenige Länge, die ein Tröpfchen vertikal aufsteigen muß bevor es sich an einer Grenzfläche (hier: Ringwände) absetzt und sich an dieser aus der Dispersion abscheiden kann. Dabei wird gleichzeitig die Grenzfläche für die Tropfenkoaleszenz gegenüber dem herkömmlichen Ringkammerabscheider vergrößert. Dadurch wird die Effektivität der Abscheidung erhöht und die Verweildauer der Flüssigkeit im Behälter verkürzt, so daß der Ringkammerabscheider mit höherem Durchsatz betrieben werden kann.

Zur Durchführung des erfindungsgemäßen Verfahrens ist ein Ringkammerabscheider mit einer Verstelleinrichtung vorgesehen, die unterschiedliche Schrägstellungen des Gehäuses ermöglicht, wobei auch eine Anordnung des Gehäuses in vertikaler Ausrichtung vorgesehen sein kann. Mit Hilfe unterschiedlicher Schrägstellungen lassen sich zweierlei Bedingungen beeinflussen: 1. Die Bedingungen für die Tropfenkoaleszenz lassen sich durch die mögliche Variation der Neigung in Abhängigkeit vom jeweiligen Produkt optimieren. 2. Es läßt sich eine Anpassung an unterschiedliche Feststoffe durchführen. Wenn der Behälter auf eine für die Ölabscheidung optimale Neigung eingestellt ist, kann diese Neigung für das Abrutschen der Feststoffe zum Behälterboden unzureichend sein. Durch die Verstellbarkeit des Neigungswinkels kann ein Kompromiß gefunden werden, der beiden Anforderungen genügt.

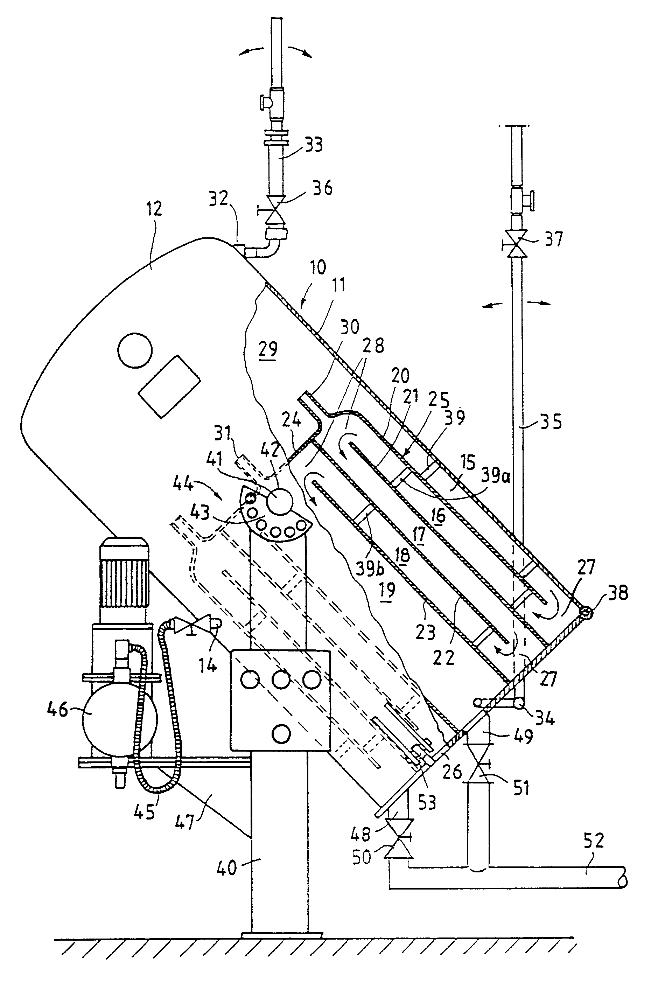

Im folgenden wird unter Bezugnahme auf die einzige Figur der Zeichnung ein Ausführungsbeispiel eines Ringkammerabscheiders zur Durchführung des erfindungsgemäßen Verfahrens näher erläutert.

In der Zeichnung ist ein Ringkammerabscheider in Seitenansicht, teilweise geschnitten, dargestellt.

Der Ringkammerabscheider dient als Ölabscheider zum Entfernen von Öl aus einer Kühlemulsion. Er weist einen zylindrischen langgestreckten Behälter 10 auf, der aus einem ringförmigen Gehäusekörper 11 besteht, welcher oben durch die Oberwand 12 verschlossen ist, die fest und nicht demontierbar an dem Gehäusekörper 11 angebracht ist, z.B. angeschweißt. An dem Gehäusekörper 11 befindet sich etwa in halber Höhe der Einlaß 14 für die Rohflüssigkeit. Der Einlaß 14 führt tangential in den Behälter 10 hinein. Im Inneren des Behälters befinden sich die koaxialen Ringkammern 15,16,17 und 18, die die Zentralkammer 19 umgeben. Die Ringkammern 15-18 und die Zentralkammer 19 sind durch Ringwände 20,21,22,23 voneinander getrennt. Die äußere Ringwand 20, die die anderen Ringwände umschließt, bildet mit der Oberwand 24 eine unten offene Glocke. Diese Glocke bildet zusammen mit den in ihr enthaltenen Ringwänden 21,22,23 eine Einheit 25 als selbständig handhabbare Baugruppe.

Die äußere Ringwand 20 der Einheit 25 und die Ringwand 22 sind fest mit der Oberwand 24 verbunden. Diese Ringwände reichen nicht bis zum Boden 26, der die untere Öffnung des Behälters 10 verschließt, sondern sie enden im Abstand von diesem Boden und bilden zusammen mit dem Boden ringförmige untere Durchlässe 27. Die beiden anderen Ringwände 21 und 23 stehen dagegen auf dem Boden 26 des Behälters auf. Sie reichen nicht bis zur Oberwand 24 sondern bilden mit dieser Oberwand ringförmige obere Durchlässe 28. Die Ringwände 20,21,22 und 23, die die koaxialen Ringkammern 15-19 begrenzen, bilden einen schlangenförmigen Strömungsweg, wobei jede zweite Ringwand 20,22 bis zur Oberwand 24 reicht, während die dazwischenliegenden Ringwände 21 und 23 bis zum Boden 26 reichen. Die außerhalb der Einheit 25 liegende äußere Ringkammer 15 wird nach außen hin durch den Behälterkörper 11 begrenzt. Der Behälter 10 ist flüssigkeitsdicht gegen die Umgebung verschlossen.

Die Rohflüssigkeit strömt vom Einlaß 14 tangential in die äußere Ringkammer 15 ein, in der sie zirkuliert. Ein Teil der leichten Fraktion steigt in der Ringkammer 15 auf und gelangt in den oberhalb der Einheit 25 befindlichen Kopfraum 29 des Behälters 10. Die übrige Rohflüssigkeit strömt durch den äußeren Durchlaß 27 und steigt in der Ringkammer 16 auf und gelangt über den oberen Durchlaß 28 in die Ringkammer 17. Derjenige Teil der leichten Fraktion, der in den Ringkammern 16 und 17 aufschwimmt, steigt in einen vom Durchlaß 28 abgehenden Rohrstutzen 30 auf. Der übrige Teil der Rohflüssigkeit gelangt durch den inneren unteren Durchlaß 27 in die Ringkammer 18 und von dort durch den inneren oberen Durchlaß 28 in die Zentralkammer 19. Das obere Ende der Zentralkammer 19 ist mit einem weiteren Stutzen 31 versehen, der ebenfalls in den Kopfraum 29 hineinführt. Der Kopfraum 29 ist über eine um eine horizontale Achse schwenkbare Rohrkupplung 32 mit einem Steigrohr 33 verbunden, in das hinein die leichte Fraktion aufsteigt. Das Steigrohr weist in vorbestimmter Höhe einen höhenverstellbaren Überlauf auf, aus dem die Flüssigkeit abgeleitet werden kann. Das untere Ende der Zentralkammer 19 ist ebenfalls über eine um eine horizontale Achse schwenkbare Rohrkupplung 34 mit einem externen Steigrohr 35 verbunden, in das hinein die schwere Fraktion aufsteigt. Auch das Steigrohr 35 ist mit einem Überlauf versehen. Die Höhendifferenz der Überläufe der beiden Steigrohre 33 und 35 gibt an, in welcher Höhe sich im Inneren des Behälters 10 die Grenzschicht zwischen der schweren und der leichten Fraktion einstellt. Das Steigrohr 33 enthält ein Absperrventil 36 und das Steigrohr 35 ein Absperrventil 37.

Der Behälterboden 26 kann um ein Gelenk 38 herum relativ zum Behälter 10 aufgeklappt werden, so daß die untere Behälteröffnung geöffnet wird und der Einsatz 25 aus dem Behälter herausgezogen werden kann. Der Einsatz 25 weist nach außen abstehende Abstandhalter 39 auf, die die äußere Ringkammer 15 überbrücken und den Einsatz im Inneren des Behälters zentrieren. Die bis zum Boden 26 reichende Ringwand 21 ist über Abstandhalter 39a im Inneren der Ringwand 20 zentriert und die innere Ringwand 23 ist über Abstandhalter 39b im Inneren der Ringwand 22 zentriert. Die Abstandhalter 39a und 39b können die jeweils benachbarten Ringwände auch starr miteinander verbinden. In diesem Fall tragen die mit der Oberwand 24 verbundenen Ringwände 20 und 22 die nicht mit der Oberwand verbundenen Ringwände 21 und 23. Es ist auch möglich, die Abstandhalter 39,39a und 39b so zu gestalten, daß sie die angrenzenden Ringwände nur in gegenseitigem Abstand halten, jedoch axiale Verschiebungen dieser Ringwände relativ zueinander ermöglichen. Ferner können die unteren Durchlässe 27 durch singuläre Stützfüße überbrückt sein, über die die Ringwände 20 und 22 auf dem Boden 26 ruhen.

Die Ringwand 20 ist durch lösbare Verschraubung an der Behälterwand 11 befestigt, um ein Rausrutschen der Einheit 25 bei Öffnung des Deckels 26 zu verhindern.

Der Behälter 10 ist zwischen zwei Säulen 40 so gelagert, daß er um eine horizontale Achse 41 schwenkbar ist. Entlang dieser Achse sind im Mittelbereich der Behälterhöhe Tragelemente 42 in Form von Achsstummeln am Behälter angebracht, die in einer Lagervorrichtung 43 der Säulen 40 gelagert sind. Eine Verstellvorrichtung 44 dient dazu, den jeweiligen Neigungswinkel des Behälters 10 einzustellen und zu fixieren. Die Verstellvorrichtung erlaubt es, die Behälterneigung beispielsweise in Winkelschritten von 15° zu verändern, wobei der Behälter zwischen einer Position mit vertikaler Behälterachse und einer Position mit horizontaler Behälterachse verstellt werden kann. Entsprechend der Behälterneigung werden die Steigrohre 33 und 35 durch Verschwenken um aie Rohrkupplungen 32 und 34 so eingestellt, daß sie jeweils eine vertikale Ausrichtung haben.

Der Einlaß 14 des Behälters 10 ist über einen flexiblen Schlauch 45 mit einer Pumpe 46 verbunden, die auf einer Konsole 47 montiert ist, welche an einer der Säulen 40 angebracht ist. Die Pumpe 46 fördert die Rohflüssigkeit mit Druck in den Behälter 10.

Feststoffe, die sich in Form von Schlamm über dem Boden 26 ablagern, können durch Schlammauslässe 48 und 49 abgefördert werden, die am Boden 26 vorgesehen sind und die über je ein Ventil 50 bzw. 51 mit einer Abführleitung 52 verbunden sind. Der Schlammauslaß 48 ist im Bereich des äußeren ringförmigen Durchlasses 27 an einer Stelle angeordnet, die bei Schrägstellung des Behälters 10 unten liegt und somit den tiefsten Teil des Innenraums des Behälters bildet. Der Schlammauslaß 49 ist im Inneren der Zentralkammer 19 an einer Stelle angeordnet, die bei Schrägstellung des Behälters den tiefsten Punkt der Zentralkammer bildet. Am Schlammauslaß 48 sammeln sich Feststoffe, die in den Ringkammer 15 und 16 absinken. Am Schlammauslaß 49 sammeln sich Feststoffe, die in der Zentralkammer 19 absinken. Die Erfahrung hat gezeigt, daß sich in den Ringkammern 17 und 18 kaum Feststoffe ablagern. Erforderlichenfalls kann an dem inneren unteren Durchlaß 27 ebenfalls ein Auslaß vorgesehen werden.

Die Ventile 50 und 51 sind normalerweise abgesperrt. Zum Ablassen des in den Schlammauslässen 48 und 49 abgelagerten Schlamms können diese Ventile geöffnet werden. Hierdurch läuft der Behälterinhalt in die Abführleitung 52 hinein aus und der Schlamm wird aus den Schlammauslässen ausgespült. Es ist auch möglich, zum Zwecke des Spülens die Ventile 36 und 37 in den Steigleitungen abzusperren und Flüssigkeit mit Druck in den Einlaß 14 einzuführen, so daß der Druck aus den geöffneten Ventilen 50 und 51 den Schlamm ausspült. Die Abführleitung 52 führt beispielsweise zu einem Papierbandfilter, das den Schlamm zurückhält, wobei die abtropfende Emulsion einer Wiederverwendung zugeführt werden kann.

Der Ringkammerabscheider kann zunächst mit vertikaler Ausrichtung des Behälters 10 betrieben werden. Er kann dann schräggestellt werden, wenn einer der Durchlässe 27 sich mit Schlamm zugesetzt hat. Durch die Schrägstellung wird mindestens der dann obenliegende Teil dieses Durchlasses 27 von Schlamm frei, da der Schlamm zur unteren Behälterspitze absinkt. Es ist auch möglich, das Maß der Schrägstellung in Abhängigkeit von dem Böschungswinkel der Schlammansammlung zu verändern oder den Entöler von vornherein schräge zu betreiben.

Der Ringkammerabscheider kann auch mit einem Boden 26 versehen sein, der keinen Schlammauslaß aufweist. In diesem Fall ist eine gelegentliche Reinigung erforderlich, wozu die den Boden 26 haltende Spannvorrichtung 53 gelöst wird, so daß der Boden um das Gelenk 38 herum hochgeklappt werden kann. Zweckmäßigerweise erfolgt das Öffnen des Bodens nachdem zuvor der Behälter 10 in eine nahezu horizontale Position geschwenkt wurde. In diesem Zustand kann auch der Einsatz 25 aus dem Behälter horizontal herausgezogen werden.

## Patentansprüche

1. Verfahren zum Betreiben eines Ringkammerabscheiders zum Trennen der unterschiedlich schweren Fraktionen eines Flüssigkeitsgemisches, mit
einem Behälter (10), der einen Einlaß (14) für das Flüssigkeitsgemisch und in unterschiedlichen Höhen angeordnete Auslässe (32,34) für die einzelnen Fraktionen aufweist,
und in dem Behälter (10) angeordneten Ringwänden (20,21,22,23), die eine Gruppe von ineinandergeschachtelten, einen schlangenförmigen Strömungsweg bildenden Ringkammern (15,16,17,18,19) begrenzen, wobei die Ringwände abwechselnd obere Durchlässe (28) und untere Durchlässe (27) bilden,
**dadurch gekennzeichnet,**
daß der Behälter (10) in einer in bezug auf die Vertikale schräggestellten Position betrieben wird, derart, daß die unteren Durchlässe (27) jeweils in einer Ebene liegen, die schräg zur Horizontalen verläuft.

2. Ringkammerabscheider zur Durchführung des Verfahrens nach Anspruch 1, mit
einem Behälter (10), der einen Einlaß (14) für das Flüssigkeitsgemisch und in unterschiedlichen Höhen angeordnete Auslässe (32,34) für die einzelnen Fraktionen aufweist,
und in dem Behälter (10) angeordneten Ringwänden (20,21,22,23), die eine Gruppe von ineinandergeschachtelten, einen schlangenförmigen Strömungsweg bildenden Ringkammern (15,16,17,18,19) begrenzen, wobei die Ringwände abwechselnd obere Durchlässe (28) und untere Durchlässe (27) bilden,
**dadurch gekennzeichnet,**
daß eine Verstelleinrichtung (44) vorgesehen ist, mit der der Behälter (10) auf unterschiedliche, in bezug auf die Vertikale schräggestellte Betriebspositionen einstellbar ist, sodaß die unteren Durchlässe (27) jeweils in einer Ebene liegen, die schräg zur Horizontalen verläuft.

3. Ringkammerabscheider nach Anspruch 2, dadurch gekennzeichnet, daß die Verstelleinrichtung (44) eine den Behälter (10) tragende Lagervorrichtung (43) aufweist, die im Mittelbereich der Behälterhöhe angeordnete Tragelemente (42) des Behälters (10) lagert.

4. Ringkammerabscheider nach Anspruch 2 oder 3, dadurch gekennzeichnet, daß der Behälter (10) durch die Verstelleinrichtung (44) bis zu einem nahezu horizontalen Neigungswinkel schwenkbar ist.

5. Ringkammerabscheider nach einem der Ansprüche 2-4, dadurch gekennzeichnet, daß die unteren Durchlässe (27) von einem abnehmbaren oder aufklappbaren Boden (26) des Behälters (10) begrenzt sind.

6. Ringkammerabscheider nach Anspruch 5, dadurch gekennzeichnet, daß der Boden (26) im Bereich mindestens eines unteren Durchlasses (27) an derjenigen Stelle, die durch die Schrägstellung die tiefste Position einnimmt, einen Schlammauslaß (48) aufweist.

7. Ringkammerabscheider nach Anspruch 5 oder 6, dadurch gekennzeichnet, daß der Boden (26) im Bereich der zentralen Ringkammer (19) an derjenigen Stelle, die durch die Schrägstellung die tiefste Position einnimmt, einen Schlammauslaß (49) aufweist.

8. Ringkammerabscheider nach einem der Ansprüche 2-7, dadurch gekennzeichnet, daß die Auslässe als schwenkbare Rohrkupplungen ausgebildet sind.

## Claims

1. A method for operating a toroidal chamber separator for separating the fractions of a liquid mixture having different weights, comprising
a container (10) having an inlet (14) for the liquid mixture and outlets (32,34) for the individual fractions, said outlets being arranged at different heights,
and toroidal walls (20,21,22,23) arranged in the container (10) and defining a group of nested toroidal chambers (15,16,17,18,19) forming a serpentine flow course, the toroidal walls alternately forming upper passages (28) and lower passages (27),
**characterized in**
that the container (10) is operated in a position inclined with respect to the vertical, in such a manner that each of the lower passages (27) lies in a plane inclined with respect to the horizontal.

2. A toroidal chamber separator for carrying out the method according to claim 1, comprising
a container (10) having an inlet (14) for the liquid mixture and outlets (32,34) for the individual fractions, said outlets being arranged at different heights,
and toroidal walls (20,21,22,23) arranged in the container (10) and defining a group of nested toroidal chambers (15,16,17,18,19) forming a serpentine flow course, the toroidal walls alternately forming upper passages (28) and lower passages (27),
**characterized in**
that an adjusting means (44) is provided by which the container (10) is adjustable to different operating positions inclined with respect to the vertical so that each of the lower passages (27) lies in a plane inclined with respect to the horizontal.

3. The toroidal chamber separator according to claim 2, characterized in that the adjusting means (44) comprises a bearing device (43) carrying the container (10), which bears carrier elements (42) of the container arranged in the middle portion of the container height.

4. The toroidal chamber separator according to claim 2 or 3, characterized in that the container (10) can be pivoted by the adjusting means (44) up to an almost horizontal angle of inclination.

5. The toroidal chamber separator according to one of claims 2-4, characterized in that the lower passages (27) are defined by a detachable or swivelling bottom (26) of the container (10).

6. The toroidal chamber separator according to claim 5, characterized in that the bottom (26) comprises a sludge outlet (48) in the region of at least one lower passage (27) at that location which assumes the lowest position due to the inclination.

7. The toroidal chamber separator according to claim 5 or 6, characterized in that the bottom (26) comprises a sludge outlet (49) in the region of the central toroidal chamber (19) at that location which assumes the lowest position due to the inclination.

8. The toroidal chamber separator according to one of claims 2-7, characterized in that the outlets are configured as pivotable pipe couplings.

## Revendications

1. Procédé pour faire fonctionner un séparateur à chambre toroïdale destiné à séparer les fractions de poids différents d'un mélange de liquides, avec
un réservoir (10), qui présente une entrée (14) pour le mélange de liquides et des sorties (32, 34), disposées à des hauteurs différentes, pour les différentes fractions,
et des parois annulaires (20, 21, 22, 23), disposées dans le réservoir (10), qui délimitent un groupe de chambres annulaires (15, 16, 17, 18, 19) emboîtées l'une dans l'autre et formant un trajet de circulation en serpentin, les parois annulaires formant alternativement des passages supérieurs (28) et des passages inférieurs (27),
caractérisé par le fait que l'on met en oeuvre le réservoir (10) dans une position inclinée par rapport à la verticale, de sorte que les passages inférieurs (27) se trouvent chaque fois dans un plan qui s'étend en oblique par rapport à l'horizontale.

2. Séparateur à chambre toroïdale pour la mise en oeuvre du procédé selon la revendication 1, avec
un réservoir (10), qui présente une entrée (14) pour le mélange de liquides et des sorties (32, 34), disposées à des hauteurs différentes, pour les différentes fractions,
et des parois annulaires (20, 21, 22, 23) disposées dans le réservoir (10) qui délimitent un groupe de chambres annulaires (15, 16, 17, 18, 19) emboîtées l'une dans l'autre et formant un trajet de circulation en serpentin, les parois annulaires formant alternativement des passages supérieurs (28) et des passages inférieurs (27),
caractérisé par le fait qu'il est prévu un dispositif de réglage (44) par lequel le réservoir (10) peut être réglé en différentes positions de fonctionnement inclinées par rapport à la verticale, de sorte que les passages inférieurs (27) se trouvent chaque fois dans un plan qui s'étend en oblique par rapport à l'horizontale.

3. Séparateur à chambre toroïdale selon la revendication 2, caractérisé par le fait que le dispositif de réglage (44) comporte un dispositif de roulement (43) portant le réservoir (10), sur lequel sont montés des éléments porteurs (42) du réservoir (10) disposés dans la zone centrale de la hauteur de réservoir.

4. Séparateur à chambre toroïdale selon la revendication 2 ou 3, caractérisé par le fait que le réservoir (10) est susceptible d'être incliné grâce au dispositif de réglage (44) jusqu'à un angle d'inclinaison pratiquement horizontal.

5. Séparateur à chambre toroïdale selon l'une des revendications 2 à 4, caractérisé par le fait que les passages inférieurs (27) sont délimités par un fond (26) amovible ou rabattable du réservoir (10).

6. Séparateur à chambre toroïdale selon la revendication 5, caractérisé par le fait que le fond (26) présente une sortie de boues (48) dans la zone d'au moins un passage inférieur (27), à l'endroit qui occupe la position la plus basse par suite de l'inclinaison.

7. Séparateur à chambre toroïdale selon la revendication 5 ou 6, caractérisé par le fait que le fond (26) présente une sortie de boues (49) dans la zone de la chambre annulaire centrale (19), à l'endroit qui occupe la position la plus basse par suite de l'inclinaison.

8. Séparateur à chambre toroïdale selon l'une des revendications 2 à 7, caractérisé par le fait que les sorties sont réalisées sous forme d'accouplements tubulaires susceptibles de pivoter.
